# EUROPEAN PATENT SPECIFICATION

(11) **EP 1 676 221 B1**
(45) Date of publication and mention of the grant of the patent: **09.07.2008**
(21) Application number: 04816888.4
(22) Date of filing: 23.09.2004
(51) Int. Cl.: G06F 19/00, H04Q 7/38, H04Q 7/22, G01C 21/30

(54) **USER INTERFACE AND METHOD FOR VEHICLE CONTROL SYSTEM**
BENUTZERSCHNITTSTELLE UND VERFAHREN FÜR FAHRZEUGSTEUERSYSTEM
INTERFACE UTILISATEUR ET PROCEDE POUR SYSTEME DE COMMANDE DE VEHICULE

(30) Priority: 10.10.2003 US 683878
(43) Date of publication of application: 05.07.2006
(73) Proprietor: OSHKOSH TRUCK CORPORATION, Oshkosh, Wisconsin 54902 (US)
(72) Inventor: PILLAR, Duane, R., Oshkosh, WI 54902 (US); SQUIRES, Bradley, C., New London, Wisconsin 54961 (US)
(74) Representative: Sonn & Partner Patentanwälte
(86) International application number: PCT/US2004/031216
(87) International publication number: WO 2005/039936

(56) References cited:
- EP-A- 1 560 141
- WO-A2-01/33868

## Description

The present invention relates to a vehicle system as described in the introductory part of claim 1.

Generally spoken, the present invention relates to a system comprising an equipment service vehicle that can communicate with mobile portable computer, namely a personal digital assistant that is off-board the vehicle. Such a system is disclosed e.g. in US 2003/0105566 A1 (preamble of claim 1).

Presently, there is a vast array of equipment service vehicles that perform a wide range of functions. Such vehicles include military vehicles, fire fighting vehicles, concrete placement and delivery vehicles, refuse handling vehicles, ambulances, airport and municipal vehicles (e.g., aircraft rescue and fire fighting vehicle, snow plows, dump trucks, etc.), utility vehicles (e.g., communications installation and service vehicles), etc. These vehicles are increasingly complex in terms of the number of features available and the technology used to provide those features. The increased complexity of these vehicles in some cases increases the amount of time that is spent maintaining, operating, and otherwise managing the vehicles.

For example, in many instances, the operator of an equipment service vehicle performs a vehicle systems check to determine that all of the appropriate systems on the vehicle are fully operational before using it. This type of check is periodically performed, often on a daily basis (e.g., before using the vehicle for the day), to ascertain malfunctions and potential problems with the vehicle before the problem becomes critical. As the complexity of the vehicle increases the number of checks required also increases. This problem is compounded by the fact that an operator typically has to turn a feature on or off in the cab of the vehicle and then get out of the cab to see if the feature is working properly. For example, a turn signal might need to be checked in this manner. Accordingly, it would be advantageous to provide the operator with the capability to manipulate devices located on the vehicle from a location off-board the vehicle.

Equipment service vehicles are often used or stored together. For example, in a military setting, vehicles travel as a convoy for protection from enemy forces. In a fire fighting setting, multiple fire fighting vehicles may respond to and fight a particular fire. In placing concrete at a large pour, multiple vehicles often line up at the construction site waiting to unload the concrete. Also, many of the vehicles may return to a common garage or parking area for overnight storage, maintenance, etc., even though these vehicles may be used separately otherwise. In a situation where these vehicles are located in close proximity, it would be advantageous to quickly and efficiently communicate the status of the vehicle to those at the scene, whether this be in the garage or at a place where the vehicles are being used. In this manner, the person in charge at the scene could quickly determine what resources are available to accomplish the task at hand or to ascertain which vehicles need to be repaired. Additionally, it would be advantageous if an operator or other person could use the status information from the equipment service vehicle for a number of other purposes such as generating reports, invoices, etc. Thus, there is also an ongoing need for methods and systems that facilitate accessing and monitoring vehicle performance using tools that are off-board the vehicle.

Accordingly, it is object of the present invention to improve the system to comply with needs as mentioned above.

To solve the given problem, the present invention provides a vehicle system with the features as defined in claim 1. Preferred embodiments are subject of the dependent claims.

Accordingly, the present vehicle system comprises a control system for an equipment service vehicle and a personal digital assistant. The control system comprises a power source, a power transmission link, a plurality of input devices, a plurality of output devices, a plurality of microprocessor-based interface modules and a communication network. The plurality of interface modules are coupled to the power source by way of the power transmission link. The plur ality of interface modules are interconnected to each other by way of the communication network. Each of the plurality of interface modules are coupled to respective ones of the plurality of input devices and the plurality of output devices. The plurality of interface modules store I/O status information for the plurality of input devices and the plurality of output devices. The control system wirelessly communicates at least some of the I/O status information to the personal digital assistant, and this personal digital assistant initiates a vehicle test program on output devices that are included in the vehicle test program. In particular, the personal digital assistant is, in a preferred embodiment, capable of generating a report comprising information about whether the output states of the output devices are within acceptable operating parameters.

Preferred embodiments of the invention to which it should, however, not be limited will be described now in more detail with preference to the attached drawings.

Fig. 1 is a schematic view of an equipment service vehicle having a control system that wirelessly communicates with a personal digital assistant according to an exemplary embodiment;

Fig. 2 is a flowchart showing the operation of the system in Fig. 1 to perform vehicle operational checks according to another exemplary embodiment;

Fig. 3. is a flowchart showing the operation of the system in Fig. 1 to perform vehicle operational checks according to another exemplary embodiment;

Fig. 4 is a flowchart showing the operation of the system in Fig. 1 to perform vehicle operational checks according to another exemplary embodiment;

Fig. 5 is a flowchart showing the operation of the system of Fig. 1 to generate a vehicle related report according to another exemplary embodiment;

Fig. 6 depicts a fleet of equipment service vehicles that each wirelessly communicate with a personal digital assistant according to another exemplary embodiment.

Fig. 7 is a flowchart showing a method for monitoring the fleet of vehicles of Fig. 6.

Various embodiments of control system architectures have been proposed in connection with equipment service vehicles such as fire trucks, military vehicles, refuse vehicles, municipal vehicles, electric vehicles and other types of vehicles and combinations thereof. An advantageous use of a control system of the types disclosed is for remotely monitoring, manipulating, performing status checks, etc., on the equipment service vehicle using an off-board computer (e.g., a personal digital assistant). In such situations, the control systems may be configured to provide information (e.g., I/O status information for input and output devices, information from other control systems such as an engine control system, etc.) to an off-board computer as described below. A description is provided below of various equipment service vehicles that use a control system of a type disclosed in the above-mentioned applications but, alternatively, could also use other vehicle-based computer systems.

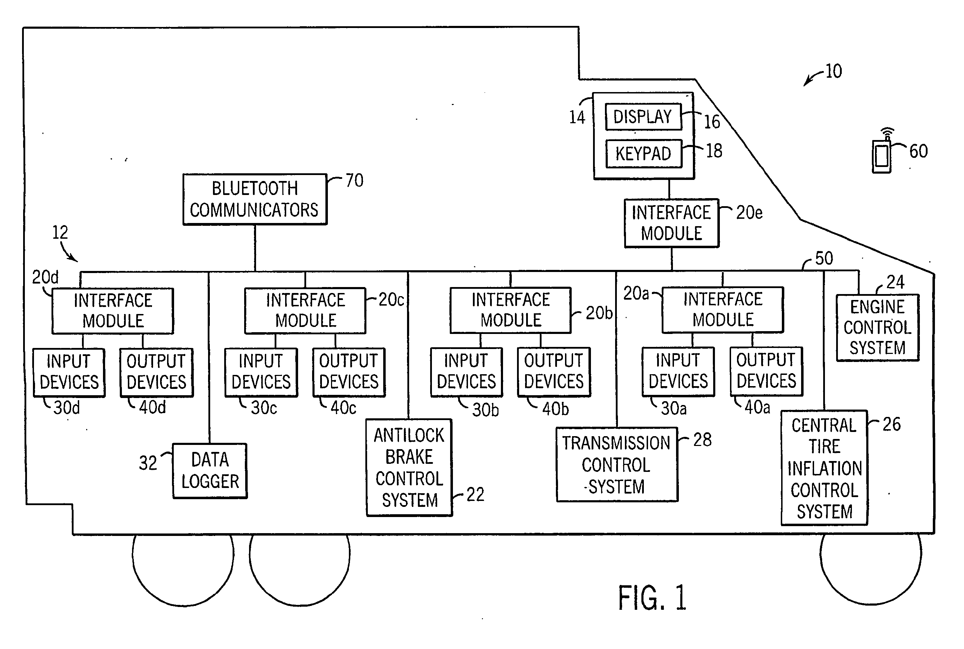

Referring to Fig. 1, an exemplary embodiment of an equipment service vehicle 10 having an electronic control system 12 is illustrated. By way of overview, the electronic control system 12 includes an operator interface 14, a plurality of microprocessor-based interface modules 20a - 20e (collectively referred to as interface modules 20), a plurality of input devices 30a - 30d (collectively referred to as input devices 30), a plurality of output devices 40a - 40d (collectively referred to as output devices 40), a data logger 32, and a plurality of additional vehicle control systems 22, 24, 26, and 28. Operator interface 14 and interface modules 20 are coupled to each other by a communication network 50. Also shown in Fig. 1 is portable mobile computer in the form of a personal digital assistant (PDA) 60, which is configured to communicate with control system 12.

Control system 12 may be configured in a number of different ways. For example, control system 12 may be configured to include multiple control systems that are coupled together. An example of such a configuration may be a fire fighting vehicle having one control system to control the aerial and another control system to control the remainder of the vehicle. Also, control system 12 may be configured to include multiple nested control systems so that control system 12 includes a smaller control system that forms a part of the overall control system 12. Thus, it should be understood that the particular configuration of control system 12 shown in Fig. 1 is only one of many embodiments of control system 12.

Equipment service vehicle 10 can be any of a number of vehicles that are capable of using and benefiting from control system 12 as disclosed herein. While the general diagram of equipment service vehicle 10 in Fig. 1 is of a military vehicle, the equipment service vehicle should not be limited to only a military vehicle. The advantages of control system 12, which are described using the example of the military vehicle, may equally apply to a vast array of other military and non-military vehicles. Also, the same may be said for any example described herein with reference to a particular type of equipment service vehicle. Thus, examples of control system 12 described in the context of a refuse vehicle are equally applicable to vehicles such as fire trucks, airport rescue and fire fighting (ARFF) vehicles, ambulances, concrete transport/placement vehicles, etc.

In the context of military vehicles, some examples of vehicles that may be used with control system 12 are heavy equipment transporter vehicles, which are used to transport battle tanks, fighting and recovery vehicles, self-propelled howitzers, construction equipment, medium tactical vehicles, and other types of equipment. Often these vehicles are used on primary, secondary, and unimproved roads and trails, and are able to transport in excess of 45,360 kg (100,000 pounds) or even in the range of 90,720 kg (200,000 pounds) or more. Control system 12 can also be used in connection with palletized load transport vehicles, in which a mobile truck and trailer form a self-contained system capable of loading and unloading a wide range of cargo without the need for forklifts or other material handling equipment. Such trucks are provided with a demountable cargo bed and a hydraulically powered arm with a hook that lifts the cargo bed on or off the truck. These trucks may also be provided with a crane to drop off the pallets individually if the entire load is not needed at a par ticular site. Further, control system 12 can also be used in connection with trucks designed for carrying payloads for cross country military missions. Such trucks may include, for example, cargo trucks, tractors, fuel servicing trucks, portable water trucks, and recovery vehicles (with crane and winch). Such trucks are capable of passing through water crossings three or four or more feet deep. These trucks can also be used for missile transports/launchers, resupply of fueled artillery ammunition and forward area rearm vehicles, refueling of tracked and wheeled vehicles and helicopters, and recovery of disabled wheeled and tracked vehicles.

In a non-military context, some examples of vehicles that may be used with control system 12 include airport and municipal vehicles such as aircraft rescue and fire fighting (ARFF) vehicles, snow removal vehicles, etc., each of which is described briefly. ARFF vehicles are generally used at airports in case there is an emergency such as a fire (e.g., a fire on an air plane or a fire caused by an airplane crash) or other emergency situation. Snow removal vehicles can be configured to use a variety of implements to remove snow such as an impeller/auger arrangement that functions to blow the snow off to the side of the area that is being cleared, a sweeper, or a snow plow. Typically, the implement used to remove the snow is coupled to the front of the vehicle. A snow removal vehicle may be configured so that multiple implements can be interchangeably mounted to the front of the vehicle. In addition to snow removal implements, many snow removal vehicles also include a bed that can be filled with a substance that melts snow and ice (e.g., salt, etc.) and is dispersed during operation of the vehicle.

Further examples of vehicles that may be used in conjunction with control system 12 are refuse handling vehicles. Refuse handling vehicles come in a variety of configurations and styles. For example, refuse handling vehicles may be configured to load refuse from the front, rear, or side of the vehicle using a refuse loader. Also, these vehicles can be configured to load refuse from residential containers, large bins, or by hand. The refuse loader may be controlled using control system 12 so that the function of loading a refuse bin into the refuse vehicle is controlled by the control system 12. In addition, refuse vehicles that load refuse from a residential curbside type refuse bin may also include a function to automatically locate the bin, reach out and grab the bin, and/or empty the bin into the refuse vehicle.

Further examples of vehicles that may also be used with control system 12 are emergency response vehicles such as fire fighting vehicles and ambulances. Examples of fire fighting vehicles that may be suitable to use with control system 12 include pumpers, aerials, tankers, rescues, wildlands, industrial and other assorted fire fighting vehicles. Ambulances typically include a number of systems used to provide emergency medical care to a person who is in transit to a medical facility. These systems can be coupled either independently or integrally with control system 12.

Further examples of vehicles that may be used in conjunction with control system 12 are concrete placement vehicles. Concrete placement vehicles typically include a drum that holds and continually mixes concrete as well as a chute for dispensing the concrete at a desired location. Concrete vehicles may be configured to dispense concrete in the front or rear of the vehicle.

Referring to Fig. 1, in an exemplary embodiment, interface modules 20 are microprocessor-based and include a plurality of analog and/or digital inputs and outputs. Interface modules 20 are coupled to and communicate with input and output devices 30 and 40. In general, in order to minimize wiring, the interface modules 20 are placed close to input devices 30, from which status information is received, and output devices 40 that are controlled. In one embodiment, interface modules 20 are coupled to input and output devices 30 and 40 via a dedicated communication link, which may simply be a hardwired link between an interface module 20 and an input or output device 30 or 40. In an alternative embodiment, input or output devices 30 or 40 may be coupled directly to communication network 50 and configured to communicate directly over communication network 50 to all of the interface modules (e.g., the status of the device is broadcast over the network), one interface module (e.g., the interface module requested information from the particular input or output device 30 or 40), or a subset of interface modules on the network.

In an exemplary embodiment, interface modules 20 are identical both in software, hardware, and physical dimensions. Thus, interface modules 20 are physically and functionally interchangeable because they are capable of being plugged in at any slot on communication network 50, and are capable of performing any functions that are required at that slot. This arrangement is highly advantageous. Because all of interface modules 20 are identically programmed and store the same information, the interface modules are physically and functionally interchangeable within a given class of vehicles. When the replacement interface module reboots, it will then reconfigure itself for use in the new vehicle, and begin operating the correct portions of the application programs. The interface modules may also be configured to be interchangeable even for vehicles of different classes (e.g., refuse vehicles and military vehicles). In an alternative embodiment, interface modules 20 may be different in software, hardware, and/or physical dimensions. Using interface modules 20 with different configurations enhances maintainability of control system 12.

In an exemplary embodiment, each of the interface modules 20 stores I/O status information for all of the other interface modules 20. In this configuration, each interface module has total system awareness. As a result, each interface module 20 processes its own inputs and outputs based on the I/O status information. The I/O status information may be provided to interface modules 20 in a number of ways. For example, in an exemplary embodiment, each of interface modules 20 may be configured to broadcast the status of input devices 30 over communication network 50 to the other interface modules 20 at predetermined intervals. In another exemplary embodiment, interface modules 20 may be configured to simultaneously or sequentially broadcast the status information to the other interface modules 20. In another exemplary embodiment, interface modules 20 may be configured to broadcast the status information in response to a change in the state of an input device 30.
This lessens the amount of traffic over communication network 50.

In another exemplary embodiment, as mentioned previously, some of the input and/or output devices 30 or 40 may be coupled directly to communication network 50. In this configuration, the input and/or output devices 30 or 40 can broadcast status information across network 50 to interface modules 20. Input and/or output devices 30 or 40 coupled directly to communication network 50 typically do not store the status information broadcast across the network for other I/O devices. Thus, one or more of interface modules 20 may be configured to control input and/or output devices 30 or 40 coupled directly to communication network 50. However, in an alternative embodiment, input and/or output devices 30 or 40 may be configured to store the status information broadcast by the other interface modules 20 and/or other devices on communication network 50.

Communication network 50 may be implemented using an appropriate network protocol. In an exemplary embodiment, communication network 50 uses a network protocol that is in compliance with the Society of Automotive Engineers (SAE) J 1708/1587 and/or J 1939 standards. However, the particular network protocol that is utilized is not critical, although all of the devices on the network should be able to communicate effectively and reliably.

The transmission medium for communication network 50 may be implemented using copper or fiber optic cable or other media. Communication network 50 may be configured in a number of ways. For example, in an exemplary embodiment, network 50 may be a single network. In another exemplary embodiment, network 50 may be comprised of multiple networks.

Power is provided to interface modules 20 from a power source by way of a power transmission link. The power transmission link may comprise, for example, a power line that is routed throughout vehicle 10 to each of interface modules 20. Interface modules 20 then distribute the power to input devices 30 and output devices 40. This type of distributed power transmission dramatically reduces the amount of wiring needed for vehicle 10.

Input devices 30 and output devices 40 are generally located on the chassis of vehicle 10. Input and output devices 30 and 40 may be any of a number of devices that are conventionally used to receive inputs and control outputs. In an exemplary embodiment, input devices 30 include devices that provide inputs used to control output devices 40. Also, input devices 30 may include devices that provide status information pertaining to vehicle parameters that are not used to control output devices 40 but may be used for other purposes (e.g., diagnosing faults in vehicle 10, generating reports regarding utilization of vehicle 10, inform operator of status of a device, etc.). The type and configuration of input and output devices 30 and 40 is not critical and will depend on the type of vehicle.

Operator interface 14 shown in Fig. 1 includes a display 16 and a keypad 18. However, operator interface 14 may include any of a number of components that are used by the operator to interface with control system 12. Of course, the specific type of component often depends on the particular equipment service vehicle for which it is being used. In general, operator interface 14 includes one or more devices that are used to communicate information to the operator (e.g., display 16, LEDs, etc.) and one or more devices that the operator uses to communicate information to control system 12 (e.g., keypad 18, joystick, buttons, switches, etc.). In this manner, the operator is able to easily determine the status of input and output devices 30 and 40, and, thus, to control input and output devices 30 and 40, as well as other control systems and devices that are coupled to communication network 50. In an exemplary embodiment, operator interface 14 may include a microprocessor and memory so the operator can customize operator interface 14.

As shown in Fig. 1 and mentioned previously, operator interface 14 includes display 16 that is used to communicate, and, in particular, to display information to the operator. Display 16 may be one of a number of various types of displays such as an LCD display, alpha-numeric display, touch screen display, SVGA monitor, etc. Display 16 may also include memory and a microprocessor, which may serve as the memory and microprocessor for operator interface 14 or may be provided in addition to any memory or a microprocessor that operator interface 14 may include. Display 16 may be configured to provide instructions to the operator for performing various operations such as diagnostics, calibrating vehicle parameters, etc. For example, display 16 may be used to prompt the operator to enter information using keypad 18, buttons or other input device, or to take certain actions with respect to vehicle 10 during operation or testing (e.g., bring the engine to a specified RPM level). Display 16 may also be used to display a menu or series of menus to allow the operator to select a diagnostic test to perform, obtain information relating to the status of a particular input device 30 or output device 40, etc. Display 16 may also be used to display status information during system startup and during testing, and to display any error messages that may arise. Display 16 is also used to display input data and fault mode indicators from control systems 22, 24, 26, and 28, and any other information from additional vehicle subsystems. Display 16 is also used to display the results of diagnostic tests that are performed (e.g., a pass/fail message or other message). Display 16 is also capable of displaying graphics of various mechanical systems of vehicle 10 so that the operator can easily ascertain the position or status of the particular vehicle component. This is especially useful for equipment service vehicles that have external apparatus that is moveable (e.g., refuse loader on a refuse loading vehicle, aerial on a fire fighting vehicle, hydraulically powered arm on a palletized load transport vehicle).

Desirably, operator interface 14 displays all of this information to the operator in a user-friendly format as opposed to in the form of codes that must be interpreted by reference to a separate service manual. This may be achieved by storing, in control system 12, information of the type commonly published in such manuals to facilitate manual interpretation of such codes, and using this information to perform the translation automatically. Likewise, as previously noted, the display is used to prompt the operator to take certain actions with respect to the vehicle during testing and to otherwise step the operator through any test procedures, without reference to a test manual. This allows the amount of operator training to be reduced.

Operator interface 14 includes keypad 18, which is used to accept or receive operator inputs. For example, keypad 18 is used to allow the operator to scroll through and otherwise navigate menus displayed by display 16 (e.g., menus depicting the status of input devices 30 and output devices 40), and to select menu items from those menus.

In an exemplary embodiment, operator interface 14 is semi-permanently mounted with equipment service vehicle 10. By semi-permanently mounted, it is meant that the operator interface 14 is mounted within the vehicle 10 in a manner that is sufficiently rugged to withstand normal operation of the vehicle for extended periods of time (at least days or weeks) and still remain operational. However, that is not to say that operator interface 14 is mounted such that it can never be removed (e.g., for servicing) without significantly degrading the structural integrity of the mounting structure employed to mount operator interface 14 to the remainder of vehicle 10. Operator interface 14 is desirably mounted in an operator compartment of vehicle 10, for example, in a recessed compartment within the operator compartment or on an operator panel provided on the dashboard. Also, while Fig. 1 shows one operator interface 14, it should be understood that other operator interfaces 14 may also be included as part of vehicle 10. Additional operator interfaces 14 may be helpful on equipment service vehicles such as refuse handling vehicles or fire fighting vehicles where the operator may need to control the functions of the vehicle while outside of the operator compartment.

Referring again to Fig. 1, the various blocks depicting interface modules 20, input devices 30, output devices 40, operator interface 14, etc. refer to various functions incorporated into control system 12 and should not be interpreted to require physically separate units that correspond to those functions. For example, interface module 20 and operator interface 14 may be physically combined in one housing that performs the same function of both interface module 20 and operator interface 14. In another embodiment, a particular input device 30 or output device 40 may be integrated physically with an interface module 20 so that the resulting combination functions in a manner that is similar to a configuration where the devices are separate yet still coupled together.

Referring back to Fig. 1, additional control systems 22, 24, 26, and 28 may also be included as part of control system 12. In an exemplary embodiment depicted in Fig. 1, an antilock brake control system 22, an engine control system 24, a central tire inflation control system 26, and transmission control system 28 are included as part of control system 12. In an alternative embodiment, control system 12 may include various additional control systems in a number of configurations. The control systems 22, 24, 26, and 28 may be coupled directly to the communication network 50 of control system 12, as shown in Fig. 1. Alternatively, control systems 22, 24, 26, and 28 may be coupled to one or more interface modules 20, which are coupled to communication network 50 (e.g., multiple networks; one network for control systems 22, 24, 26 and 28 and another for the remainder of control system 12). In an exemplary embodiment, control systems 12, 22, 24, 26 and 28 all used the same communication protocol (e.g, J1939, etc.) In this embodiment, one or more interface modules 20 may be used to facilitate and/or coordinate communication of control system 12 and control systems 22, 24, 26, and 28. In another embodiment, some or all of the control systems 22, 24, 26, and 28 may use a variety of different communication protocols that may need to be converted to the protocol used by communication network 50. In this embodiment, one or more interface modules 20 may be used to facilitate communication (e.g., convert signals from various protocols, etc.) between network 50 and control systems 22, 24, 26, and 28.

By connecting control systems 22, 24, 26, and 28 to control system 12, an array of additional input and output status information becomes available. For example, for the engine, this allows the control system 12 to obtain I/O status information pertaining to engine speed, engine hours, oil temperature, oil pressure, oil level, coolant level, fuel level, and so on. For the transmission, this allows control system 12 to obtain, for example, information pertaining to transmission temperature, transmission fluid level and/or transmission state (e.g., 1^{st} gear, 2^{nd} gear, and so on). Assuming that an off-the-shelf engine or transmission control system is used, the information that is available depends on the manufacturer of the system and the information that they have chosen to make available.

The control system 12 is configured to wirelessly communicate with PDA 60. In an exemplary embodiment, PDA 60 is configured to communicate with control system 12 by way of any one of interface modules 20. However, in alternative embodiments, PDA 60 may be configured to communicate directly to communication network 50 or through an interface module that is dedicated to allowing PDA 60 to communicate with control system 12. PDA 60 is usable by an operator to retrieve, manipulate, and examine data stored and/or controlled using control system 12. For example, PDA 60 can be used to retrieve and examine the information stored by the data logger 32 (e.g., accident reconstruction, etc.). Likewise, if control system 12 includes a vehicle maintenance jacket, PDA 60 can be used to retrieve and modify data stored in the vehicle maintenance jacket. PDA 60 allows diagnostic software to be utilized for remote or local troubleshooting of control system 12, for example, through direct examination and control of the states of input and output devices 30 and 40. PDA 60 also allows a convenient platform from which to download new firmware to control system 12.

In an exemplary embodiment, PDA 60 is configured to perform at least the functions that operator interface 14 is capable of performing. In some situations, PDA 60 may be configured to perform more functions than those performed by operator interface 14. For example, in an exemplary embodiment, PDA 60 is configured so that the operator can manipulate the throttle of the engine, which may be a function that operator interface 14 is not configured to perform. In an alternative embodiment, PDA 60 may be configured to perform fewer functions than operator interface 14. This may be useful in situations where it is desired to minimize the size of the software used by PDA 60.

Control system 12 and PDA 60 may communicate in a number of ways. In an exemplary embodiment, PDA 60 is configured to use a variety of wireless communication protocols such as Bluetooth, Wi-Fi, etc. to communicate with control system 12. In the example of Fig. 1, control system 12 includes Bluetooth communicators 70, which are used to communicate information to PDA 60. In an exemplary embodiment, Bluetooth communicators are coupled to network 50. In another exemplary embodiment, Bluetooth communicators 70 are coupled to an interface module 20. Of course, numerous other configurations may be used to allow Bluetooth communicators to communicate with control system 12. PDA 60 may also communicate using digital and/or analog signals. In an exemplary embodiment, PDA 60 may be configured to communicate with control system 12 wirelessly using encryption technology. This is particularly desirable if the vehicle is a military vehicle where it is desirable to prevent unauthorized parties from intercepting communications and/or allowing the enemy to control the vehicle remotely. PDA 60 may be configured to communicate directly (i.e., the communications do not pass through other computers external to the equipment service vehicle) with control system 12 from a variety of distances (e.g., ten miles, five miles, two miles, one mile, one-half mile, 1000 feet, 500 feet, 100 feet, and/or 20 feet). The distance at which PDA 60 communicates with control system 12 may depend on a number of factors such as desired power consumption, communication protocol, etc. However, it should be noted that PDA 60 may be configured to communicate with control system 12 from a distance that is typically closer than other off-board computers that use cellular modems, etc.

Generally, PDA 60 is a computer that is smaller than a conventional laptop or desktop. PDA 60 includes a microprocessor, memory, an operating system, a power supply (e.g., alkaline batteries, rechargeable batteries, connection to A/C power), a display, an input device, and input/output ports. The major differences between PDA 60 and a laptop are size, display and mode of data entry. PDAs are generally palm-sized and/or hand-held, while laptops tend to be larger and heavier. Laptops have larger displays and typically use a full size keyboard. PDAs are generally smaller and lighter. They have smaller displays and typically rely on stylus/touch-screen or similar technology and handwriting recognition programs for data entry. PDAs generally do not use keyboards, and, if they do they use a miniature keyboard.

PDA 60 may have any of a variety of operating systems such as Palm OS (developed by 3Com) or PocketPC (formerly called Windows CE, developed by Microsoft). Other operating systems, including proprietary and/or custom operating systems, may be used in PDA 60. The choice of an operating system is not critical.

In an exemplary embodiment, PDA 60 does not include a hard drive. However, PDA 60 may be configured to connect and interface with an external hard drive. Rather than use a hard drive, PDA 60 stores software (e.g., address book, calendar, memo pad, operating system, spreadsheet, software to interface with control system 12) and data (e.g., I/O status information from control system 12) in non-volatile memory, which remains intact even when the machine shuts down, and/or volatile memory (e.g., RAM). This approach has several advantages over conventional laptop and desktop computers. For example, when PDA 60 is turned on, all of the software programs are instantly available. The operator does not have to wait for applications to load. Also, if changes are made to data the changes are stored automatically, without using a save command. In addition, when PDA 60 is turned off, the data is typically safe, because PDA 60 continues to draw a small amount of power from the power supply.

PDA 60 is used to perform operational and status checks of equipment service vehicle 10. Advantageously, PDA 60 in combination with control system 12 allows the operator to manipulate input and/or output devices remotely, etc., thus alleviating the need for the operator to enter the cab to turn on a particular feature (e.g., lights, etc.) and then walk back to inspect whether the device is working properly. Also, PDA 60 in combination with control system 12 allows the operator to perform checks that previously required two people to perform- For example, to check the status of the brake lights, previously one person had to press the brake pedal while someone else observed whether the lights were working. Using PDA 60, the operator can turn on the brake lights and observe the brake lights at the same time.

In an exemplary embodiment, PDA 60 is configured to have access to all of the information available in control system 12. This includes I/O status information (e.g., I/O status information from input and output devices 30 and 40 as well as I/O status information from control systems 22, 24, 26, and 28, etc.). PDA 60 may also have access to information contained in data logger 32. Thus, the operator has access to all of this information through PDA 60. In an alternative embodiment, PDA 60 may be configured so that less than all of the information contained in control system 12 is available. For instance, PDA 60 may have access to only that information that is relevant to performing the particular checks.

In another exemplary embodiment, PDA 60 may have access to other information regarding vehicle 10 that may not be included as part control system 12. For example, vehicle 10 may include cargo that is radio frequency tagged. PDA 60 is able to receive the radio frequency signals to determine the characteristics of the cargo (e.g., its destination, what kind of cargo it is, etc.). PDA 60 can combine the information received pertaining to the cargo with the information received from control system 12 to produce a report (e.g., a report showing cargo that has been delivered since the last cargo status check, etc.). In an alternative embodiment, of course, control system 12 may be configured to receive the radio frequency tags from the cargo. In another embodiment, PDA 60 may include a bar code reader that is capable of reading the bar codes on the cargo. As described, the cargo is typically physically discrete items such as pallets of material (e.g., military supplies). However, it should be understood that the teachings herein also apply to other types of cargo such as concrete in a concrete placement vehicle, water in a firetruck, etc.

In a typical situation, the operator of an equipment service vehicle performs operational checks at the beginning of each day or at other relevant times (e.g., before a convoy of military vehicles depart, after a certain number of vehicle miles traveled, after the vehicle has been operated for a certain number of engine hours). It should be understood that the timing of the checks and the devices that are checked are not critical. In performing the checks, the operator can manipulate the vehicle and acquire information from control system 12 using PDA 60.

With reference to Table 1, in addition to daily operational checks, PDA 60 may be useful in performing diagnostic tests or daily checks as well, for example, after it has been determined that a vehicle subsystem is malfunctioning. Table 1 provides a list of tests that may be helpful in pinpointing the source of a problem:

**Table 1**

| **Test** | **Test Description and Application** | **Exemplary Measurement Range(s)** |
|---|---|---|
| | LIGHT TESTS | |
| Turn Signals | Determine if turn signals are working | PASS/FAIL |
| Headlights | Determine if headlights are working | PASS/FAIL |
| Clearance Lights | Determine if clearance lights are working | PASS/FAIL |
| Interior Lights | Determine if interior lights are working | PASS/FAIL |
| Brake Lights | Determine if brake lights are working | PASS/FAIL |
| | CHASSIS TESTS | |
| Horn Test | Determine if horn is working | PASSIFAIL |
| Tire Pressure (psi) Tire (psi) | Determine if tire pressure is acceptable | 1,8 - 8,3 bar (26-120psi) |
| | ENGINE TESTS | |
| Engine RPM (AVE) | Measures average speed of engine crankshaft. | 50 - 5000RPM |
| Engine RPM, Cranking SI only | Measures cranking RPM. Per formed with ignition ON. Inhibit spark plug firing allowing cranking without starting. | 50 -1500RPM |
| Power Test (RPM/SEC) | Measures engine's power producing potential in units of RPM/SEC. Used when programmed engine constants and corresponding Vehicle Identification Number (VID) have not been established. | 500 - 3500RPM/s |
| Power Test (% Power) | Measures percentage of engine's power producing potential compared to full power of a new engine. | 0-100% |
| Compression Unbalance (%) | Evaluates relative cylinder compression and displays percent difference between the highest and the lowest compression values in an engine cycle. | 0-90% |
| | IGNITION TESTS | |
| Dwell Angle (TDC) | Measures number of degrees that the points are closed. | 10 - 72 @ 2000RPM |
| Points Voltage (VDC) | Measures voltage drop across the points (points positive to battery return). | 0 - 2VDC |
| Coil Primary | Measures voltage available at the coil positive terminal of the operating condition of the coil. | 0 - 32VDC |
| | FUEL/AIR SYSTEM TESTS | |
| Fuel Level | Measures level of fuel | Empty - Full |
| Fuel Supply Pressure (psi) | | 0 - 6,9 bar (0 - 100 psi) |
| Fuel Supply Pressure (psi) | This test measures the outlet pressure of the fuel pump. | 0 - 690 mbar, (0 - 10psi) 0 - 2,07 bar, (0 - 30psi) 0 - 6,9 bar, (0 - 100psi) 0-20.7 bar, (0 - 300psi) |
| Fuel Return Pressure (psi) | Measures return pressure to detect return line blockage, leaks, or insufficient restrictor back pressure. | 0 - 6,9 bar, (0 - 100psi) |
| Fuel Filter Pressure Drop (PASS/FAIL) | Detects dogging via opening of a differential pressure switch across the secondary fuel filter. | PASS/FAIL |
| Fuel Solenoid Voltage (VDC) | Measures the voltage present at the fuel shutoff solenoid positive terminal. | 0 - 32VDC |
| Air Cleaner Pressure Drop (RIGHT) (In H₂O) | Measures suction vacuum in air intake after the air cleaner relative to ambient air pressure to detect extent of air cleaner clogging. | 0-60 in H₂O (1 in. = 25,4 mm) |
| Air Cleaner Pressure Drop (LEFT) (In H₂O) | Second air cleaner on dual intake systems. | 0 - 60 in H₂O |
| Turbocharger Outlet Pressure (RIGHT) (In Hg) | Measures discharge pressure of the turbocharger. | 0-66,5 mbar, (0 - 50 in. Hg) |
| Turbocharger Outlet Pressure (LEFT) (in Hg) | Second turbocharger on dual intake systems. | 0 - 66,5 mbar, (0 - 50 in. Hg) |
| Airbox Pressure (In Hg) | Measures the airbox pressure of two stroke engines. This measurement is useful in detecting air induction path obstructions or leaks. | 0 - 26,6 mbar, (0 - 20 in. Hg) 0 - 66,5 mbar, (0 - 50 in. Hg) |
| Intake Manifold Vacuum (In Hg) | Spark ignition engine intake system evaluation. | 0 - 39,9 mbar, (0 - 30 in. Hg) |
| Intake Manifold Vacuum Variation (In Hg) | Spark ignition engine intake system evaluation. | 0 - 39,9 mbar, (0 - 30 in. Hg) |
| | LUBRICATION/COOLING SYSTEM TESTS | |
| Engine Oil Pressure (psi) | Measures engine oil pressure. | 0-6,9 bar, (0-100psi) |
| Engine Oil Filter | Measures the pressure drop across the engine oil filter as indicator of filter element clogging. | 0-1,7 bar, (0 - 25psi) (0 -25 psi) |
| Engine Oil Temperature (°F) | Primarily applicable to air cooled engines. Requires transducer output shorting switch on vehicle to perform system zero offset test | 49 -149°C (120 - 300°F) |
| Engine Oil Level (qts) | Measures level of engine oil | 3,8 -14,2 l (4 -15 qts) |
| Engine Coolant Level | Measures level of engine coolant | Low - Max |
| Engine Coolant Temperature (°F) | Transducer output shorting switch on vehicle required. | 49 -149°C (120-300°F) |
| | STARTING/CHARGING SYSTEM TESTS | |
| Battery Voltage (VDC) | Measure battery voltage at or near battery terminals. | 0-32 VDC |
| Starter Motor Voltage (VDC) | Measures the voltage present at the starter motor positive terminal. | 0 - 32 VDC 32 |
| Starter Negative | Measures voltage drop on | 0 - 2 VDC |
| Cable Voltage Drop (VDC) | starter path. A high voltage indicates excessive ground path resistance. | |
| Starter Solenoid Volts (VDC) | Measures voltage present at the starter solenoid's positive terminal. Measures current through battery ground path shunt. | 0 - 32 VDC |
| Starter Current, Average . Current, verage (amps) | Measures starter current. | 0 - 1000A 0 - 2000A |
| Starter Current First Peak (Peak Amps, | Provides a good overall assessment of complete starting system. Tests condition of the starting circuit and battery's ability to deliver starting current. The measurement is made at the moment the starter is engaged and prior to armature movement. Peak currents less than nominal indicate relatively high resistance caused by poor connections, faulty wiring, or low battery voltage. | 0 - 1000A 0 - 2000A |
| Battery Internal Resistance (Milliohms) | Evaluate battery condition by measuring battery voltage and current simultaneously. | 0 - 999.9mohm |
| Starter Circuit Resistance (Milliohms) | Measures the combined resistance of the starter circuit internal to the batteries. | 0 - 999.9mohm |
| Battery Resistance Change (Milliohms/sec) | Measures rate of change of battery resistance as an indicator of battery condition. | 0 - 999.9mohm/s |
| Battery Current | Measures current to or from the battery. | -999 - 1000A -999 - 2000A |
| Battery Electrolyte Level (PASS/FAIL) | Determines whether electrolyte in the sensed cell is of sufficient level (i.e., in contact with electrolyte probe). | PASS/FAIL |
| Alternator/Generator Output Voltage (VDC) | Measures output voltage of Measures output voltage of generator/alternator. | 0 - 32 VDC |
| Alternator/Generator Field Voltage (VDC) | Measures voltage present at alternator/generator field windings. | 0-32 VDC |
| Alternator/Generator Negative Cable Voltage Drop (VDC) | Measures voltage drop in ground cable and connection between alternator/generator ground terminal and battery negative terminal. | 0-2 VDC |
| Alternator Output Current Sense (VAC-RMS) | Measures voltage output at the current transformer in 650 ampere alternator. | 0-3 VAC |
| Alternator AC VOtage Sense (VAC-RMS) | Measures alternator output voltage. | 0 - 22 VAC |

In general, the specific tests that are performed are selected depending on the application, including the type of equipment utilized by the vehicle 10. Most or all tests may be simple in nature from a data acquisition standpoint, involving primarily bringing the vehicle to a particular operating condition (e.g., engine speed), if necessary, and obtaining information from a suitable transducer constructed and placed to measure the parameter of interest, although more elaborate tests could also be utilized. Any number of different devices can be tested and/or information obtained, each providing a separate data point regarding the status of the vehicle. The operator can use the information provided during this testing to determine whether the vehicle is in good working order, or whether some subsystem or component thereof needs to be repaired or replaced.

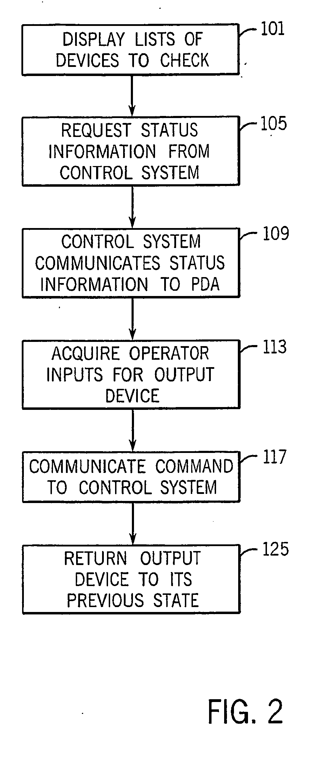

Referring to Fig.2, a flowchart is shown of an exemplary embodiment for performing operational checks using PDA 60. Typically, the operator is outside vehicle 10 and is standing adjacent to a device that needs to be checked so that the operator can watch to see if it is working properly. At step 101, PDA 60 displays a list of output devices 40 to check. In an exemplary embodiment, PDA 60 displays a series of menus that include a listing of output devices 40 or other various devices (e.g., input devices 30, output devices 40, information from control system 24, etc.) that are capable of being controlled or that provide information. For example, PDA 60 may be configured to include menus broken down into categories based on the function or location of the devices (examples of menu categories may include: engine, lights, front, back, right side, left side). In an alternative embodiment, output devices 40 may be broken down by interface module 20. Although, in this embodiment, the output state of one of output devices 40 is checked, it should be understood that the operator may be able to check and manipulate most or all of the devices that are coupled to control system 12 or view any of the information that is contained in control system 12. Thus, the teachings described herein are not limited to checking output devices 40.

Once the operator selects a particular output device 40 to check, PDA 60 requests the present status information of that output device 40 from control system 12, as shown at step 105 in Fig. 2. In this embodiment, PDA 60 is configured to request information from control system 12 on an as needed basis. However, in an alternative embodiment, PDA 60 may receive periodic broadcasts of information from control system 12. To prevent control system 12 from simply broadcasting indiscriminately, PDA 60 may be configured to communicate a signal to control system 12 to notify control system 12 that PDA 60 is available to receive information broadcasts (e.g., responsive to operator inputs received at PDA 60 or at user interface 14). Control system 12 then broadcasts information for a predetermined period of time. Each time control system 12 receives a signal from PDA 60, the period of time is reset. In another exemplary embodiment, control system 12 may be configured to broadcast particular information to PDA 60 only if that information has changed since the last time the information was provided to PDA 60.

At step 109, control system 12 responds to the request by communicating the requested information (e.g., status of a particular output device 40, etc.) back to PDA 60. In an exemplary embodiment, the information is I/O status information that is stored in each of the interface modules 20. In this embodiment, the information is readily available to be communicated to PDA 60. In another embodiment, the information may be information from one of control systems 22, 24, 26, and 28. In this case, the information is obtained from the respective control system and communicated to PDA 60 via an interface module 20. Of course, the particular manner in which the information is communicated from control system 12 to PDA 60 is not critical.

PDA 60 displays information received from control system 12 to the operator. In an exemplary embodiment, the information pertaining to the status of the particular output device 40 includes the following information: the interface module 20 that output device 40 is coupled to, warning information (e.g., the device has shorted to ground, routine maintenance is needed, etc.), device status (e.g., on/off status, % open, etc.), present amperage draw, amperage draw limit, location (e.g., front driver's side fender, etc.), etc. This information provides initial feedback that the right device is selected and the system is working properly.

In another exemplary embodiment, PDA 60 is configured to receive regular I/O status broadcasts from control system 12. In this embodiment, steps 105 and 109 are not necessary since PDA 60 is constantly updated with information. In another exemplary embodiment, the operator may be able to select a particular output device 40 and enter commands to manipulate the device without PDA 60 initially displaying the status of that device. For example, when the operator selects a device to manipulate, PDA 60 may be configured to display a list of actions that the operator can perform (e.g., if the device is a light, then PDA 60 displays the options of turning it on or off, etc.) without first displaying the status of the device. The operator then selects an action to perform (e.g., turn the light on, etc.), and PDA 60 communicates the command to control system 12. In another exemplary embodiment, PDA 60 may substitute for individual input devices 30. Advantageously, this embodiment allows interlocks to be used and allows input devices 30 to be tested.

At step 113, PDA 60 acquires operator inputs to control the output state of the particular output device 40. In an exemplary embodiment, the operator changes the on/off state of the device to be on so that operator can observe whether the device is working properly.

At step 117, PDA 60 communicates the command input by the operator to control system 12, which changes the output state of the particular output device accordingly. It is at this point that the operator observes the output state of the device to determine that it is functioning properly. For example, if the particular output device 40 that is being checked is an exterior light then the operator simply watches to see if the light turns on. If the light does not turn on, then the operator knows that there is a problem with the light (e.g., the bulb is burnt out, short circuit, etc.). In another example, the particular output device 40 that is being checked may be a hydraulic ram (e.g., ram for raising or lowering a platform at the back of the equipment service vehicle, ram that moves a crane attached to the vehicle, etc.) or power take off (e.g., PTO to operate auxiliary hydraulic pump, etc.). The operator is able to turn the device on using PDA 60 and determine whether it is working properly. In another example, the operator may wish to check the pressure of the tires. PDA 60 obtains tire pressure information from control system 12, which includes central tire inflation control system 26, and displays that information to the operator. Based on this information, the operator can then inflate or deflate the tires as desired. If the inflation and/or deflation mechanism is coupled to control system 12 (e.g., the mechanism is part of central tire inflation control system 26) then the operator can also check to see if these devices are working properly by observing them as they are each turned on and off. In an another embodiment, central tire inflation control system 26 is configured to maintain the tire pressure at a set level. When the operator checks the tire pressure, the operator can adjust the tire pressure set level based on the use of the vehicle for that day (e.g., tire pressure for a military vehicle being used primarily off-road in sandy or muddy conditions may be lower than if the vehicle is used to travel in a convoy down a paved highway).

At step 125, PDA 60 is used by the operator to return the particular output device to its previous state. At this point, the operator has completed the process of checking the particular output device 40 and can repeat this procedure to check other devices on vehicle 10.

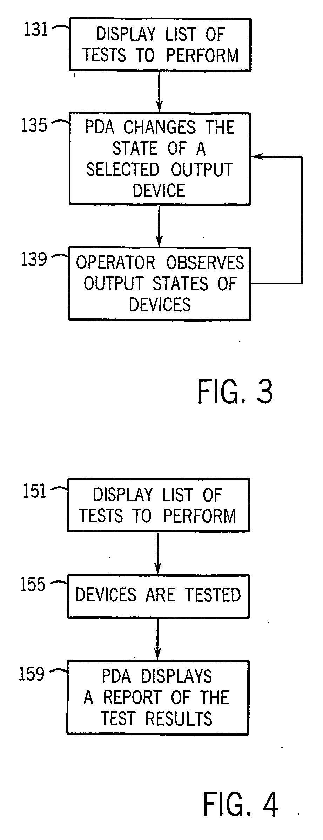

Fig. 3 depicts a flowchart of another exemplary embodiment that may be used to check devices on vehicle 10. In particular, PDA 60 is configured to include tests comprising sequences for actuating various devices of vehicle 10 At step 131, PDA 60 displays a list of tests to perform. The operator chooses a test from the list. In an exemplary embodiment, PDA 60 is configured to include numerous tests. For example, one test may include a sequence for actuating devices that the operator is required to check on a daily, monthly, or other periodic basis (e.g., in the morning before operating the vehicle). For example, a sequence of lights may be tested as an operator walks around the vehicle. Another test may include a sequence for actuating devices that are interrelated (e.g., checking the lights, the refuse loader on a refuse loading vehicle, the aerial on a fire truck, etc.). Still another test may include a sequence for actuating devices to diagnose a particular problem. In an exemplary embodiment, PDA 60 displays menus to the operator of the available tests, which the operator uses to select the test to be performed.

Once the operator selects the appropriate test, PDA 60 sequentially actuates or changes the states of the devices that are included in the test, as shown at step 135 in Fig. 3. Thus, once the operator selects the appropriate test, the devices are manipulated automatically (i.e., manipulating two or more devices without operator input). In an exemplary embodiment, PDA 60 does this by communicating the individual commands to control system 12 in a timed sequential manner. Control system 12 receives the commands and changes the output states accordingly. In an alternative embodiment, control system 12 includes the test programs. PDA 60 is used to communicate a command to control system 12 instructing control system 12 which test to perform. This embodiment is advantageous because less information is being communicated between PDA 60 and control system 12.

Also, the test programs are configured so that the devices are actuated sequentially as the operator walks around vehicle 10. Thus, as the operator walks around vehicle 10 only those devices that are adjacent the operator are actuated and the operator is able to observe the devices (step 139, Fig. 3). Also, each device is actuated long enough for the operator to determine whether the device is operating properly. For example, lights may be configured to be on for only a short amount of time while the tire inflation system, for example, may be on for a longer time so that an increase in tire pressure can be measured.

In another exemplary embodiment, PDA 60 may be configured to display the status of the device that is being actuated as the operator walks around vehicle 10. Thus, the operator is able to visually inspect the device and view the information provided from control system 12 pertaining to the device. In this manner, the operator may be able to determine if there is an inconsistency between the information provided from control system 12 and what is observed visually or through manual measurements (e.g-, control system 12 shows a tire pressure as being normal, when it visually looks low or flat or when measurements from a hand held tire gauge are significantly different).

Also, in another exemplary embodiment, PDA 60 may be configured to prompt the operator to obtain input or instruct the operator to perform a task during the test. For example, the operator may be prompted to lift the hood before beginning the portion of the test related to devices under the hood. In addition, the tests may be configured so that the operator has the option to pause the test at any point using PDA 60 and restart it later. Thus, if a problem is found, the operator can pause the test, inspect the potentially faulty device more closely and then resume the test after finishing the inspection. While the test is paused, or at any other time during the test, the operator may have the option of repeating the test for a particular device or manipulating other devices and/or viewing information contained in control system 12. For example, the operator may use PDA 60 to rev the engine to further diagnose a problem. Advantageously, this eliminates the need for two people to be present to diagnose a problem (e.g., one person to rev the engine, the other to observe the engine). In this manner, the operator can use PDA 60 to further diagnose any devices that initially fail the test.

Fig. 4 depicts a flowchart of another exemplary embodiment that may be used to check devices on vehicle 10. In the embodiment depicted in Fig. 4, test programs are used to automatically test the selected output devices. At step 151 PDA 60 displays a list of test to perform. Using the list, the operator can select the desired test program to perform. The test programs available are similar to those described in connection with step 131 of Fig. 3.

At step 155, the devices are tested to determine whether the devices are within acceptable operating parameters. In this embodiment, the operator is not required to walk around vehicle 10 and observe the devices as each one is tested. Rather, control system 12 and/or PDA 60 operate to test the devices with little or no operator intervention. Acceptable operating parameters for the particular devices are stored in control system 12 and/or PDA 60.

Step 155 may be accomplished in a number of ways. In an exemplary embodiment, PDA 60 communicates a command to control system 12 to begin the test. Control system 12 performs the test and then communicates the results to PDA 60, which displays the results to the operator. In another exemplary embodiment, PDA 60 is configured to communicate commands to control system 12 to manipulate each device. As each device is manipulated the results are communicated to PDA 60, which then generates a report of the results to present to the operator.

At step 159, PDA 60 displays a report of the results from the test to the operator. The report may be configured in a number of ways. For example, the report may be configured to display information related to devices that are working properly and devices that are operating outside of acceptable operating parameters. Desirably, the report is configured to prominently display those devices that failed the test. For the devices that failed the test, the report may also include other information that is helpful in diagnosing the cause of the failure. For example, if a light failed the test, then the report may include further information on whether the light is drawing current when switched on. If the light is drawing current but is not turning on, then this suggests that there is a short. However, if the light is not drawing current then the problem is more likely to be a burnt out bulb. Of course, even if the report did not include this information, the operator is able to access it using PDA 60.

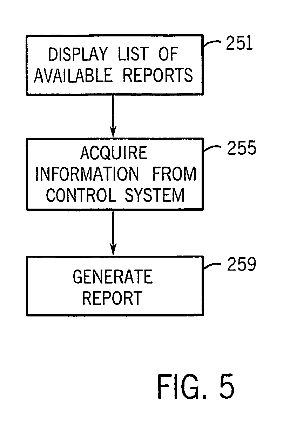

Referring now to Fig. 5, PDA 60 may advantageously be used to generate reports pertaining to vehicle 10. At step 251, PDA 60 displays a list of available reports. From the list, the operator selects a report to generate. The number of reports available can vary widely. PDA 60 can be configured to include reports related to any of a number of devices and/or information that is available via control system 12. For example, PDA 60 may be configured to generate a generic vehicle status report that may include information such as the remaining fuel loading on-board the vehicle, range of the vehicle with present fuel, vehicle weight, odometer reading, etc. Also, PDA 60 may be configured to generate a report concerning a certain subsystem of vehicle 10. For instance, PDA 60 may be configured to generate a report pertaining to the engine of vehicle 10. The report may include information on the compression of each cylinder, average miles traveled per gallon of fuel consumed, etc.

At step 255, PDA 60 acquires the necessary information from control system 12. This can be done in one of the many ways previously described. In an exemplary embodiment, PDA 60 may also acquire information from other sources. For example, PDA 60 may acquire information from other items on vehicle 10 such as cargo that is radio frequency tagged, as explained previously.

At step 259, PDA 60 generates the report and displays it to the operator. In an exemplary embodiment, PDA 60 generates reports using information from control system 12 combined with information from other sources. Information from other sources may include, but is not limited to, weather information, atlas information, expense information, information from a GPS receiver, etc. For example, if the operator is planning a trip, the operator can enter in the departure address and arrival address and generate a report that displays the approximate miles that will be traveled, weather along the route, whether there are any devices that should receive routine maintenance before departure, etc. For example, atlas information may be combined with the vehicle's present location, which is provided via GPS, to advise the operator whether there is enough fuel to make it to the next destination. Also, during the trip, the operator can input vehicle expenses (e.g., fuel, etc.) and/or personal expenses (e.g., meals, lodging, etc.) into PDA 60. In an exemplary embodiment, PDA 60 includes software (e.g., spreadsheet or word processor preconfigured with a trip report template) to generate a trip report. Some fields of the trip report may be populated automatically based on vehicle data (e.g., fuel usage, miles traveled, weight carried, etc.) while others (e.g., meal expenses, etc.) may be entered manually by the operator. At the end of the trip, PDA 60 can use the expense information provided by the operator during the trip to prepare a trip report, which includes actual number of miles traveled, average speed, total time to destination, average fuel economy, total expenses, etc. If the operator needs to generate a bill for the trip (e.g., a bill for customer to pay, etc.), PDA 60 can be configured to generate a bill based on the actual mileage of the trip, weight of delivered load, pick up and deliver times, etc. This is one of numerous advantageous features that may be realized by combining PDA 60 with control system 12 and/or with other external data sources. If the vehicle 10 includes a cell phone modem or other wireless link for communicating with a remote computer, e.g., by way of the Internet, the bill generated by PDA 60 may then be communicated wirelessly tot he remote computer. The remote computer may then combine the invoice with other similarly-generated invoices, if applicable, and forward the combined invoices to a customer for payment.

PDA 60 in combination with control system 12 may be used to provide a number of other advantageous features. For example, if vehicle 10 gets stuck in mud or sand, the operator can use PDA 60 to control various aspects of vehicle 10 to get it out. The advantage of using PDA 60 is that the operator can be outside of the vehicle and, thus, can observe exactly what is happening. In this manner, the operator can use PDA 60 to control a winch, the engine's RPM, and the movement of the tires all from outside the vehicle. In another example, the operator may be maneuvering the vehicle in an area with very little room. In this situation, the operator may be able to observe the vehicle move while controlling the vehicle's movement using PDA 60. In this situation, the steering controls for the vehicle are part of control system 12 and, thus, can be manipulated using PDA 60.

In another exemplary embodiment, PDA 60 may be used as an anti-theft device. In this embodiment, control system 12 is configured to disable vehicle 10 from traveling if control system 12 can no longer communicate with PDA 60. Because the vehicle is locked and completely shut down the enemy cannot use the vehicle. In another example, an ambulance may be configured in a similar manner. However, in this situation, the ambulance is not completely shut down when control system 12 is no longer in communication with PDA 60. Rather, control system 12 is configured to simply prevent the ambulance from moving (e.g., transmission is locked, steering is locked, etc.). Thus, the critical systems of the ambulance (e.g., oxygen delivery system, power to a defibrillator, etc.) are not shut down when control system 12 loses contact with PDA 60. Of course, any equipment service vehicle can be configured according to this example or in any other suitable manner to prevent the vehicle from being stolen when control system 12 loses contact with PDA 60. Also, the vehicle may be equipped with an override to allow the operator to continue operating the vehicle even though the control system 12 has lost contact with PDA 60. In one embodiment, the operator may be able to override the anti-theft feature by entering a password or numerical code into control system 12. Other suitable methods may be used as well.

In another exemplary embodiment, PDA 60 may be used in conjunction with control system 12 to allow the operator to remotely operate vehicle 10. For example, in a military context, the operator may be pinned down by enemy fire and need to access his or her vehicle (e.g., make an escape, retrieve more ammunition, etc.). The operator can use PDA 60 to operate the vehicle to move it nearer to the operator. In another example, in the context of placing concrete, the operator may need to move the vehicle a short distance in order to correctly position the concrete chute. The operator can use PDA 60 to move the concrete placement vehicle the short distance, thus alleviating the need to have the operator enter the cab, move the vehicle, and exit the cab again.

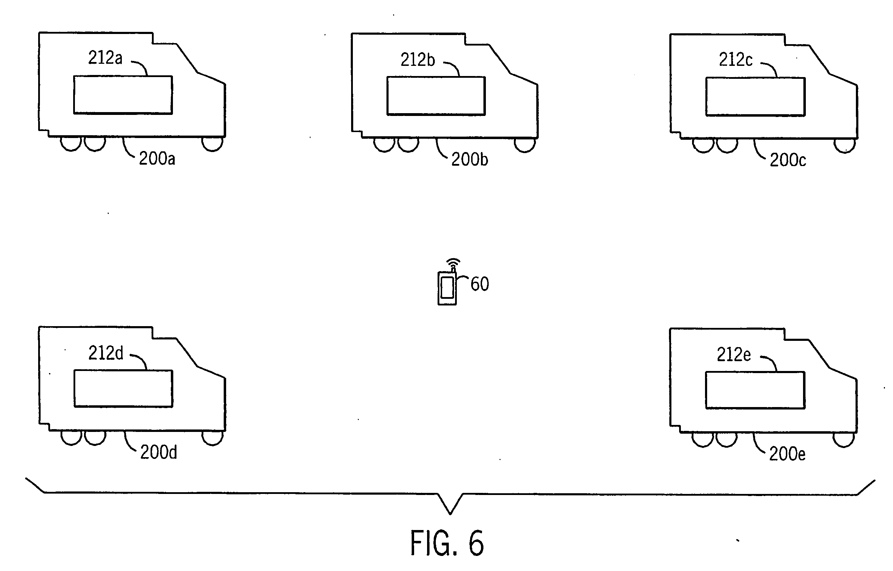

Referring now to Fig. 6, a diagram is shown of a system where PDA 60 can communicate with the control systems 212a - 212e (collectively referred to as control systems 212) of multiple equipment service vehicles 200a - 200e (collectively referred to as vehicles 200). Control systems 212 may include all of the features, functions, and options that control system 12 includes. Vehicles 200 may be any of a number of vehicles that are in close proximity to one another (e.g., fire trucks at a fire, concrete vehicles at a pour, refuse handling vehicles parked overnight, convoy of military vehicles). Although in most situations vehicles 200 are of a similar type (e.g., fire trucks, military, etc.), PDA 60 can be configured to communicate with vehicles 200 that are of different types (e.g., fire truck and an ambulance, refuse handling vehicle and a concrete placement vehicle, etc.).

In an exemplary embodiment, each one of vehicles 200 includes a PDA 60 that is configured to interface with each respective vehicle 200a - 200e. In this situation each one of PDAs 60 associated with each one of vehicles 200 can be configured to manipulate and view to all of the information of the other vehicles 200 that are nearby. In this manner, each operator is apprised of the status of all of the vehicles. According to an alternative embodiment, each one of PDAs 60 associated with each one of vehicles 200 can be configured to be able to view the information from the other vehicles 200, but only one of the PDAs 60, typically the PDA 60 associated with a person of leadership over the vehicles 200 (e.g., fire chief, military officer, etc.), is configured to be able to manipulate the devices and information on the other vehicles 200. According to another alternative embodiment, each operator may be required to provide a password or some other form of identification (e.g., fingerprint scanning, retina scanning, etc.) to access a particular PDA 60. Thus, the operator's access to certain data or functions (e.g., ability to view certain information on various vehicles 200, ability to manipulate devices on various vehicles 200) may be limited as desired.

Vehicles 200 are configured to communicate all of the information available in control systems 212 to PDA 60. According to an exemplary embodiment, vehicles 200 are configured to communicate the information to PDA 60 by transmitting it directly from vehicle 200 to PDA 60. In this embodiment, PDA 60 is capable of receiving information from any of vehicles 200 that are within range of PDA 60. In another embodiment, vehicles 200 are configured to communicate information to the other vehicles 200, which then communicate the information to PDA 60. The information is communicated by directly transmitting the information from one of vehicles 200 to another of vehicles 200 until it reaches PDA 60. In this configuration, PDA 60 can communicate with vehicles 200 that may be out of range for direct communication with PDA 60 because the information can be communicated from the vehicle 200 that is out of range to one of vehicles 200 that is within range. Of course any of a number of ways of communicating the information from vehicles 200 to PDA 60 can be used. In another embodiment, vehicles 200 may use a secure satellite link to communicate with PDA 60.

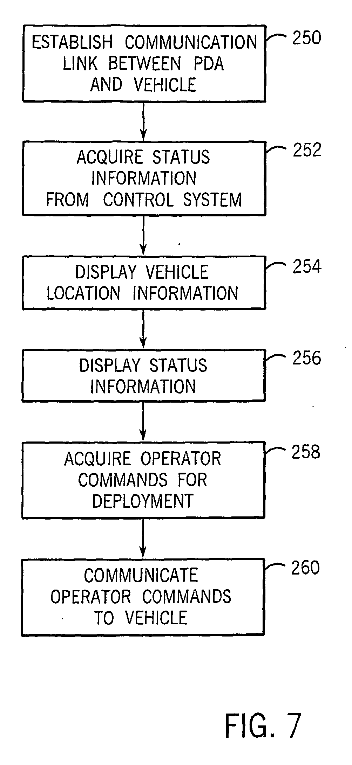

Referring to Figs. 7, an for fleet monitoring and real-time mission readiness assessment using PDA 60 is shown. The method shown in Figs. 7 is useable to obtain a real time assessment of each vehicle 200 in a fleet of vehicles. This is useful, for example, in the context of a natural disaster or other emergency when it is not known which vehicles 200 are operational, and the locations of the vehicles 200 are not known. This is also useful when the use of numerous vehicles 200 need to be coordinated such as at the scene of a fire or during military operations.

At step 250, PDA 60 establishes a communication link with one or more of vehicles 200. At step 252, PDA 60 acquires status information from control system 212 of each vehicle 200. Much of the status information in control systems 212 is constantly updated and stored so that PDA 60 only needs to request the information. However, in order to obtain some status information, it may be necessary to perform a series of tests of multiple devices and acquire output from multiple sensors. In an exemplary embodiment, PDA 60 is configured to manipulate the devices of vehicles 200 to provide the necessary status information. However, it is also possible that PDA 60 simply communicates a signal to control systems 212 instructing the control system to perform the necessary tests to acquire the information and then simply communicate the information back to PDA 60. Included as part of the information acquired from control systems 212 is location information.

At steps 254 and 256, PDA 60 displays the status information including the location of vehicles 200. In an exemplary embodiment, PDA 60 may display a map (e.g., city map, topographical map, etc.) with icons representing vehicles 200 superimposed on the map at locations corresponding to the actual position of vehicles 200. In an exemplary embodiment, the icons are displayed in a manner which is indicative of the status of the vehicle. For example, in the context of military vehicles, a red icon indicates an inoperable vehicle, a yellow icon indicates a semi-operable vehicle, and a green icon represents a vehicle which is substantially fully operable. In another example, only two colors may be used (e.g., green and red), with varying levels of gradations between red and green being used to indicate a percentage level of operability. In another example, in the context of fire fighting vehicles, a red icon indicates a vehicle that is almost out of fire fighting agent, a yellow icon indicates a vehicle that has approximately half of its fire fighting agent remaining, and a green icon indicates a vehicle that has more than three quarters of its fire fighting agent remaining. Of course, the status information used to determine the color of the icon may be configurable (e.g, instead of basing the color of the icon on the amount of fire fighting agent remaining, it may be based on the amount of fuel remaining). Also, PDA 60 may be configured to a combination of status information such as fuel remaining and fire fighting agent remaining to determine the appropriate color of the icon. In an exemplary embodiment, an operator can select an icon (e.g., touch the icon with stylus) representing a particular vehicle to obtain additional status information.

In an exemplary embodiment, PDA 60 may be configured to display the icons according to the type of vehicle represented. For example, an icon representing a fire truck may be displayed as a small representation of a fire truck, whereas an icon representing a refuse handling vehicle may be displayed as a small representation of a refuse handling vehicle.

Displaying the location of vehicles 200 superimposed over a map allows the person in charge to obtain an immediate overall picture of the real time locations of the operable vehicles available to accomplish the task at hand. For example, in a military application, a battlefield commander is able to view a map of the battlefield and obtain an immediate overall picture of the locations of the operable military vehicles.

In another example, vehicles 200 may be fire trucks at the scene of a fire. In this situation, the person in charge (e.g., fire chief) can use PDA 60 to access information from control systems 212 related to each of vehicles 200 to ascertain the resources available to fight the fire (e.g., water levels, foam levels, oxygen levels, etc.). Using this information, the person in charge can determine quickly and easily whether additional fire trucks are needed or whether there are already too many fire trucks at the scene, etc.

In another example, vehicles 200 may be concrete placement vehicles at a concrete pour. In this situation, the person in charge (e.g., construction foreman), or any person having the appropriate access to the information, can use PDA 60 to access information from control systems 212 related to each of vehicles 200 (e.g., water and concrete levels). As can be seen, PDA 60 combined with control systems 212 can be used on a number of vehicles to ascertain the vehicles status and available resources.

At step 258, PDA 60 acquires operator commands for vehicle deployment- For example, in military applications, a commander can control troop movements by selecting a particular vehicle 200 and moving it on the screen to a new location on the display of the battlefield map. When the selected vehicle 200 is moved, the new location of each of vehicle 200 on the map is converted to GPS coordinates, and the new GPS coordinates are communicated at step 260 to vehicle 200 as part of a command from the operator to move vehicle 200 to the new location. Once the icon is dragged to the new location, a shadow icon is displayed at the new location until vehicle 200 reaches the new location, thus allowing the operator of PDA 60 to know the actual vehicle 200 position as well as vehicle 200's commanded location. When vehicle 200 reaches it commanded position, the shadow icon is no longer displayed.

It is also possible that PDA 60 is configured to communicate the same command to vehicles 200. For example, if a particular work shift starts at 6:00 a.m., PDA 60 can be used to communicate a command to control systems 212 to start the engine at 5:50 a.m. each day so that the vehicles are warmed up and ready to go when the shift starts. Similarly, PDA 60 may be used to run a report to determine whether the engine oil (or other parameter of interest) is low on any of vehicles 200 before starting the shift, thus saving time by not requiring the employee to check the oil. Many other advantageous features may also be realized.

Throughout the specification, numerous advantages of preferred embodiments have been identified. It will be understood of course that it is possible to employ the teachings herein so as to without necessarily achieving the same advantages. Additionally, although many features have been described in the context of a vehicle control system comprising multiple modules connected by a network, it will be appreciated that such features could also be implemented in the context of other hardware configurations- Further, although various figures depict a series of steps which are performed sequentially, the steps shown in such figures generally need not be performed in any particular order. For example, in practice, modular programming techniques are used and therefore some of the steps may be performed essentially simultaneously. Additionally, some steps shown may be performed repetitively with particular ones of the steps being performed more frequently than others. Alternatively, it may be desirable in some situations to perform steps in a different order than shown.

## Claims

1. A vehicle system comprising:
a control system (12) for an equipment service vehicle (10) comprising:
a power source;
a power transmission link;
a plurality of input devices (30),
a plurality of output devices (40),
a plurality of microprocessor-based interface modules (20) and a communication network (50), the plurality of interface modules (20) being coupled to the power source by way of the power transmission link, the plurality of interface modules (20) being interconnected to each other by way of the communication network (50), each of the plurality of interface modules (20) being coupled to respective ones of the plurality of input devices (30) and the plurality of output devices (40), and the plurality of interface modules (20) storing I/O status information for the plurality of input devices and
the plurality of output devices; and
a personal digital assistant (60);
wherein the control system (12) wirelessly communicates at least some of the I/O status information to the personal digital assistant (60);
**characterized in that** the personal digital assistant (60) initiates at least a vehicle test program on output devices (40) on the vehicle (10) that are included in the vehicle test program; and the interface modules (20) are microprocessor-based interface modules; and **in that** the control system (12) wirelessly receives commands from the personal digital assistant (60) and adjusts output states of output devices (40) that are included in the vehicle test program in response to the commands, thereby allowing the personal digital assistant (60) to manipulate the output states of the plurality of output devices (40) that are included in the vehicle test program;
wherein the vehicle test program sequentially actuates the output devices (40) that included in the vehicle test program, the personal digital assistant (60) manipulating the output devices (40) that are included in the vehicle test program as the personal digital assistant (60) moves around the equipment service vehicle (10).

2. The vehicle system of claim 1, **characterized in that** the personal digital assistant (60) is capable to pauses the vehicle test program to at least one of the output devices (40) by an operator.

3. The vehicle system according to claim 1 or 2, **characterized in that** the output states of multiple output devices (40) are manipulated automatically and the personal digital assistant (60) generates a report comprising information about whether the output states of the multiple output devices (40) are within acceptable operating parameters.

4. The vehicle system according to any one of claims 1 to 3, **characterized in that** the personal digital assistant (60) generates a report based on the I/O status information.

5. The vehicle system according to claim 4, **characterized in that** the report comprises information pertaining to the utilization of the vehicle (10) during a particular period of time.

6. The vehicle system according to claim 4 or 5, **characterized in that** the report comprises information pertaining to the loading of the vehicle (10) during a particular period of time.

7. The vehicle system according to any one of claims 1 to 6, **characterized in that** the I/O status information is communicated by way of an encrypted wireless communication link.

8. The vehicle system according to any one of claims 1 to 7, **characterized in that** the I/O status information is wirelessly communicated directly from the control system (12) to the personal digital assistant (60).

9. The vehicle system according to any one of claims 1 to 8, **characterized in that** the personal digital assistant (60) receives input using a touch-screen.

10. The vehicle system according to any one of claims 1 to 9, **characterized in that** the personal digital assistant (60) displays the I/O status information on a display.

11. The vehicle system according to any one of claims 1 to 10,
**characterized in that** each of the plurality of interface modules (20) broadcasts I/O status information pertaining to the respective input and output devices (30, 40) coupled to each respective interface module (20) to the remaining interface modules (20); and
each of the plurality of interface modules (20) maintains an I/O status table, the I/O status table storing I/O status information for the plurality of input devices (30) and the plurality of output devices (40).

12. The vehicle system according to any one of claims 1 to 11, **characterized in that** output states of the plurality of output devices (40) are determined at the respective interface module (20) to which the output device is coupled based, at least in part, on input status information stored at the respective interface module.

13. The vehicle system according to any one of claims 1 to 12, **characterized in that** the plurality of interface modules (20) are distributed throughout the vehicle (10), and each respective interface module (20) is locally disposed with respect to the respective input and output devices (30, 40) to which the respective interface module is coupled, so as to permit distributed data collection from the respective input devices (30) to the respective interface module (20) and distributed power distribution from the respective interface module (20) to the respective output devices (40).

14. The vehicle system according to any one of claims 1 to 13, **characterized in that** in the case of a fleet of equipment service vehicles (200), each vehicle comprising a control system (212), the personal digital assistant (160) is capable of being connected to receive I/O status information from each vehicle (200) in the fleet of vehicles by way of a wireless communication network, the personal digital assistant (60) being capable of generating a report that compares utilization information for each of the vehicles (200).

15. The system according to claim 14, **characterized in that** the personal digital assistant (60) generates the report based on distance traveled by each of the vehicles (200).

16. The system according to claim 14, **characterized in that** the personal digital assistant (60) generates the report based on distance traveled by at least one vehicle (200).

17. The system according to claim 14, **characterized in that** the personal digital assistant (60) generates the report based on engine utilization time of the vehicles (200).

18. The system according to claim 14, **characterized in that** the personal digital assistant (60) generates the report based on on-site time of the vehicles (200).

19. The system according to claim 14, **characterized in that** the vehicle comprises a plurality of vehicle subsystems, and groups of output devices are compared to indicate relative usage of particular vehicle subsystems.

## Patentansprüche

1. Fahrzeugsystem mit:
einem Steuersystem (12) für ein Ausrüstungs-Servicefahrzeug (10), enthaltend:
eine Energiequelle;
eine Energieübertragungsverbindung;
eine Mehrzahl von Eingabegeräten (30);
eine Mehrzahl von Ausgabegeräten (40);
eine Mehrzahl von auf Mikroprozessoren basierenden Schnittstellen-Modulen (20) und ein Kommunikationsnetzwerk (50), wobei die Mehrzahl von Schnittstellen-Modulen (20) über die Energieübertragungsverbindung mit der Energiequelle verbunden ist, wobei die Mehrzahl von Schnittstellen-Modulen (20) über das Kommunikationsnetzwerk (50) miteinander verbunden sind, wobei jedes der Mehrzahl von Schnittstellen-Modulen (20) mit jeweiligen Eingabegeräten (30) und Ausgabegeräten (40) verbunden ist, und wobei die Mehrzahl von Schnittstellen-Modulen (20) I/O(Eingabe/Ausgabe)-Statusinformationen für die Mehrzahl von Eingabegeräten und die Mehrzahl von Ausgabegeräten speichert; und
einen persönlichen digitalen Assistenten (60);
wobei das Steuersystem (12) zumindest einige der I/O-Statusinformationen drahtlos zum persönlichen digitalen Assistenten (60) überträgt;
**dadurch gekennzeichnet, dass** der persönliche digitale Assistent (60) zumindest ein Fahrzeug-Testprogramm auf Ausgabegeräten (40) am Fahrzeug (10), die im Fahrzeug-Testprogramm inkludiert sind, initiiert; und die Schnittstellen-Module (20) auf Mikroprozessoren basierende Schnittstellen-Module sind; und dass das Steuersystem (12) drahtlos Befehle vom persönlichen digitalen Assistenten (60) empfängt und den Ausgabestatus der Ausgabegeräte (40), die im Fahrzeug-Testprogramm inkludiert sind, in Antwort auf die Befehle einstellt, wodurch ermöglicht wird, dass der persönliche digitale Assistent (60) den Ausgabestatus der Mehrzahl von Ausgabegeräten (40), die im Fahrzeug-Testprogramm inkludiert sind, manipuliert;
wobei das Fahrzeug-Testprogramm sequentiell die Ausgabegeräte (40), die im Fahrzeug-Testprogramm inkludiert sind, betätigt,
wobei der persönliche digitale Assistent (60) die Ausgabegeräte (40), die im Fahrzeug-Testprogramm inkludiert sind, manipuliert, wenn sich der persönliche digitale Assistent (60) um das Ausrüstungs-Servicefahrzeug (10) herum bewegt.

2. Fahrzeugsystem nach Anspruch 1, **dadurch gekennzeichnet, dass** der persönliche digitale Assistent (60) imstande ist, das Fahrzeug-Testprogramm durch einen Betreiber auf zumindest einem der Ausgabegeräte (40) anzuhalten.

3. Fahrzeugsystem nach Anspruch 1 oder 2, **dadurch gekennzeichnet, dass** der Ausgabestatus von mehreren Ausgabegeräten (40) automatisch manipuliert wird und der persönliche digitale Assistent (60) einen Bericht erstellt, der Informationen darüber enthält, ob der Ausgabestatus der mehreren Ausgabegeräte (40) innerhalb akzeptabler Betriebsparameter liegen.

4. Fahrzeugsystem nach einem der Ansprüche 1 bis 3, **dadurch gekennzeichnet, dass** der persönliche digitale Assistent (60) einen Bericht basierend auf den I/O-Statusinformationen erstellt.

5. Fahrzeugsystem nach Anspruch 4, **dadurch gekennzeichnet, dass** der Bericht Informationen umfasst, die die Verwendung des Fahrzeugs (10) während einer bestimmten Zeitperiode betreffen.

6. Fahrzeugsystem nach Anspruch 4 oder 5, **dadurch gekennzeichnet, dass** der Bericht Informationen umfasst, die das Laden des Fahrzeugs (10) während einer bestimmten Zeitperiode betreffen.

7. Fahrzeugsystem nach einem der Ansprüche 1 bis 6, **dadurch gekennzeichnet, dass** die I/O-Statusinformationen über eine verschlüsselte drahtlose Kommunikationsverbindung übertragen werden.

8. Fahrzeugsystem nach einem der Ansprüche 1 bis 7, **dadurch gekennzeichnet, dass** die I/O-Statusinformationen direkt vom Steuersystem (12) drahtlos zum persönlichen digitalen Assistenten (60) übertragen werden.

9. Fahrzeugsystem nach einem der Ansprüche 1 bis 8, **dadurch gekennzeichnet, dass** der persönliche digitale Assistent (60) über einen Touchscreen Eingaben empfängt.

10. Fahrzeugsystem nach einem der Ansprüche 1 bis 9, **dadurch gekennzeichnet, dass** der persönliche digitale Assistent (60) die I/O-Statusinformationen auf einer Anzeige anzeigt.

11. Fahrzeugsystem nach einem der Ansprüche 1 bis 10, **dadurch gekennzeichnet, dass** jedes der Mehrzahl von Schnittstellen-Modulen (20) I/O-Statusinformationen betreffend die jeweiligen Eingabe- und Ausgabegeräte (30, 40), die mit jedem jeweiligen Schnittstellen-Modul (20) verbunden sind, an die restlichen Schnittstellen-Module (20) sendet; und jede der Mehrzahl von Schnittstellen-Modulen (20) ein I/O-Statusverzeichnis führt, wobei das I/O-Statusverzeichnis die I/O-Statusinformationen für die Mehrzahl von Eingabegeräten (30) und die Mehrzahl von Ausgabegeräten (40) speichert.

12. Fahrzeugsystem nach einem der Ansprüche 1 bis 11, **dadurch gekennzeichnet, dass** der Ausgabestatus der Mehrzahl von Ausgabegeräten (40) am jeweiligen Schnittstellen-Modul (20), mit dem das Ausgabegeräte verbunden ist, zumindest teilweise auf der Basis von Eingabestatus-Informationen, die am jeweiligen Schnittstellen-Modul gespeichert sind, bestimmt werden.

13. Fahrzeugsystem nach einem der Ansprüche 1 bis 12, **dadurch gekennzeichnet, dass** die Mehrzahl von Schnittstellen-Modulen (20) über das ganze Fahrzeug (10) verteilt sind, und jedes jeweilige Schnittstellen-Modul (20) in Bezug auf die jeweiligen Eingabe- und Ausgabegeräte (30, 40), mit dem das jeweilige Schnittstellen-Modul verbunden ist, örtlich angeordnet ist, um eine verteilte Datensammlung von den jeweiligen Eingabegeräten (30) zum jeweiligen Schnittstellen-Modul (20) und eine Energieverteilung vom jeweiligen Schnittstellen-Modul (20) zu den jeweiligen Ausgabegeräten (40) zu ermöglichen.

14. Fahrzeugsystem nach einem der Ansprüche 1 bis 13, **dadurch gekennzeichnet, dass**, im Falle einer Reihe von Ausrüstungs-Servicefahrzeugen (200), wobei jedes Fahrzeug ein Steuersystem (212) enthält, der persönliche digitale Assistent (160) angeschlossen werden kann, um die I/O-Statusinformationen von jedem Fahrzeug (200) aus der Reihe von Fahrzeugen über ein drahtloses Kommunikationsnetzwerk zu empfangen, wobei der persönliche digitale Assistent (60) imstande ist, einen Bericht zu erstellen, der die Benutzungsinformationen für jedes der Fahrzeuge (200) vergleicht.

15. System nach Anspruch 14, **dadurch gekennzeichnet, dass** der persönliche digitale Assistent (60) den Bericht basierend auf der Distanz erstellt, die jedes der Fahrzeuge (200) zurückgelegt hat.

16. System nach Anspruch 14, **dadurch gekennzeichnet, dass** der persönliche digitale Assistent (60) den Bericht basierend auf der Distanz erstellt, die zumindest ein Fahrzeug (200) zurückgelegt hat.

17. System nach Anspruch 14, **dadurch gekennzeichnet, dass** der persönliche digitale Assistent (60) den Bericht basierend auf der Motorbenutzungszeit der Fahrzeuge (200) erstellt.

18. System nach Anspruch 14, **dadurch gekennzeichnet, dass** der persönliche digitale Assistent (60) den Bericht basierend auf der Zeit erstellt, die die Fahrzeuge (200) vor Ort verbringen.

19. System nach Anspruch 14, **dadurch gekennzeichnet, dass** das Fahrzeug eine Mehrzahl von Fahrzeug-Untersystemen enthält, und Gruppen von Ausgabegeräten verglichen werden, um die relative Verwendung von bestimmten Fahrzeug-Untersystemen anzugeben.

## Revendications

1. Système de véhicule comprenant :
un système de commande (12) destiné à un véhicule d'entretien d'équipement (10) comprenant :
une source d'alimentation ;
une liaison de transmission d'énergie ;
une pluralité de dispositifs d'entrée (30),
une pluralité de dispositifs de sortie (40),
une pluralité de modules d'interface basés sur des microprocesseurs (20) et un réseau de communication (50), la pluralité de modules d'interface (20) étant couplée à la source d'alimentation à l'aide de la liaison de transmission d'énergie, les modules d'interface (20) étant interconnectés les uns aux autres à l'aide du réseau de communication (50), chacun de la pluralité de modules d'interface (20) étant couplé à la pluralité de dispositifs d'entrée respectifs (30) et à la pluralité de dispositifs de sortie (40), et la pluralité de modules d'interface (20) stockant des informations de statut E/S pour la pluralité de dispositifs d'entrée et la pluralité de dispositifs de sortie ; et
un assistant numérique personnel (60) ;
dans lequel le système de commande (12) communique sans fil au moins certaines des informations de statut E/S à l'assistant numérique personnel (60) ;
**caractérisé en ce que** l'assistant numérique personnel (60) déclenche au moins un programme de test de véhicule sur les dispositifs de sortie (40) sur le véhicule (10) qui sont inclus dans le programme de test de véhicule ; et les modules d'interface (20) sont des modules d'interface basés sur des microprocesseurs ; et **en ce que** le système de commande (12) reçoit sans fil des commandes de la part de l'assistant numérique personnel (60) et ajuste les états de sortie des dispositifs de sortie (40) qui sont inclus dans le programme de test de véhicule en réponse aux commandes, permettant ainsi à l'assistant numérique personnel (60) de manipuler les états de sortie de la pluralité de dispositifs de sortie (40) qui sont inclus dans le programme de test de véhicule ;
dans lequel le programme de test de véhicule actionne séquentiellement les dispositifs de sortie (40) qui sont inclus dans le programme de test de véhicule, l'assistant numérique personnel (60) manipulant les dispositifs de sortie (40) qui sont inclus dans le programme de test de véhicule lorsque l'assistant numérique personnel (60) se déplace autour du véhicule d'entretien d'équipement (10).

2. Système de véhicule selon la revendication 1, **caractérisé en ce que** l'assistant numérique personnel (60) est capable de mettre en pause le programme de test de véhicule sur au moins l'un des dispositifs de sortie (40) par un opérateur.

3. Système de véhicule selon la revendication 1 ou 2, **caractérisé en ce que** les états de sortie des différents dispositifs de sortie (40) sont manipulés automatiquement et l'assistant numérique personnel (60) génère un rapport comprenant des informations relatives au fait que les états de sortie des différents dispositifs de sortie (40) se trouvent dans le cadre de paramètres de fonctionnement acceptables.

4. Système de véhicule selon l'une quelconque des revendications 1 à 3, **caractérisé en ce que** l'assistant numérique personnel (60) génère un rapport sur la base des informations de statut E/S.

5. Système de véhicule selon la revendication 4, **caractérisé en ce que** le rapport comprend des informations relatives à l'utilisation du véhicule (10) pendant une période de temps particulière.

6. Système de véhicule selon la revendication 4 ou 5, **caractérisé en ce que** le rapport comprend des informations relatives au chargement du véhicule (10) pendant une période de temps particulière.

7. Système de véhicule selon l'une quelconque des revendications 1 à 6, **caractérisé en ce que** les informations de statut E/S sont communiquées à l'aide d'une liaison de communication sans fil cryptée.

8. Système de véhicule selon l'une quelconque des revendications 1 à 7, **caractérisé en ce que** les informations de statut E/S sont communiquées sans fil directement entre le système de commande (12) et l'assistant numérique personnel (60).

9. Système de véhicule selon l'une quelconque des revendications 1 à 8, **caractérisé en ce que** l'assistant numérique personnel (60) reçoit une entrée à l'aide d'un écran tactile.

10. Système de véhicule selon l'une quelconque des revendications 1 à 9, **caractérisé en ce que** l'assistant numérique personnel (60) affiche les informations de statut E/S sur un afficheur.

11. Système de véhicule selon l'une quelconque des revendications 1 à 10,
**caractérisé en ce que** chacun de la pluralité de modules d'interface (20) diffuse des informations de statut E/S relatives aux dispositifs d'entrée et de sortie respectifs (30, 40) couplés à chaque module d'interface respectif (20) vers les modules d'interface restants (20) ; et
chacun de la pluralité de modules d'interface (20) maintient une table de statut E/S, la table de statut E/S stockant les informations de statut E/S pour la pluralité de dispositifs d'entrée (30) et la pluralité de dispositifs de sortie (40).

12. Système de véhicule selon l'une quelconque des revendications 1 à 11, **caractérisé en ce que** les états de sortie de la pluralité de dispositifs de sortie (40) sont déterminés au niveau du module d'interface respectif (20) auquel le dispositif de sortie est couplé sur la base, au moins en partie, des informations de statut d'entrée stockées au niveau du module d'interface respectif.

13. Système de véhicule selon l'une quelconque des revendications 1 à 12, **caractérisé en ce que** la pluralité de modules d'interface (20) est répartie au sein du véhicule (10), et chaque module d'interface respectif (20) est disposé localement par rapport aux dispositifs d'entrée et de sortie respectifs (30, 40) auxquels le module d'interface respectif est couplé, de façon à permettre une collecte de données distribuée entre les dispositifs d'entrée respectifs (30) et le module d'interface respectif (20) et une répartition d'énergie distribuée entre le module d'interface respectif (20) et les dispositifs de sortie respectifs (40).

14. Système de véhicule selon l'une quelconque des revendications 1 à 13, **caractérisé en ce que**, dans le cas d'une flotte de véhicules d'entretien d'équipement (200), chaque véhicule comprenant un système de commande (212), l'assistant numérique personnel (160) est capable d'être connecté afin de recevoir les informations de statut E/S de la part de chaque véhicule (200) de la flotte de véhicules à l'aide d'un réseau de communication sans fil, l'assistant numérique personnel (60) étant capable de générer un rapport qui compare les informations d'utilisation pour chacun des véhicules (200).

15. Système de véhicule selon la revendication 14, **caractérisé en ce que** l'assistant numérique personnel (60) génère le rapport sur la base de la distance parcourue par chacun des véhicules (200).

16. Système de véhicule selon la revendication 14, **caractérisé en ce que** l'assistant numérique personnel (60) génère le rapport sur la base de la distance parcourue par au moins un véhicule (200).

17. Système de véhicule selon la revendication 14, **caractérisé en ce que** l'assistant numérique personnel (60) génère le rapport sur la base de la durée d'utilisation du moteur des véhicules (200).

18. Système de véhicule selon la revendication 14, **caractérisé en ce que** l'assistant numérique personnel (60) génère le rapport sur la base de la durée passée sur site des véhicules (200).

19. Système de véhicule selon la revendication 14, **caractérisé en ce que** le véhicule comprend une pluralité de sous-systèmes de véhicule, et des groupes de dispositifs de sortie sont comparés afin d'indiquer l'utilisation relative de sous-systèmes de véhicule particuliers.
